# EUROPEAN PATENT APPLICATION

(11) **EP 4 811 457 A1**
(43) Date of publication of application: **23.09.2026**
(21) Application number: 24899252.1
(22) Date of filing: 12.07.2024
(51) Int. Cl.: H01M 4/587, H01M 10/0525, H01M 4/1393

(54) **GRAPHITE NEGATIVE ELECTRODE ACTIVE MATERIAL AND PREPARATION METHOD THEREFOR, SECONDARY BATTERY, AND ELECTRIC DEVICE**

(30) Priority: 07.12.2023 CN 202311676609
(71) Applicant: Contemporary Amperex Technology Co., Limited, Ningde, Fujian 352100 (CN)
(72) Inventor: MA, Jianjun, Ningde, Fujian 352100 (CN); HE, Libing, Ningde, Fujian 352100 (CN)
(74) Representative: Ziebig Hengelhaupt Intellectual Property Attorneys Patentanwaltskanzlei PartGmbB
(86) International application number: PCT/CN2024/105178
(87) International publication number: WO 2025/118601

(57) **Abstract**

A graphite negative electrode active material and a preparation method therefor, a secondary battery, and an electric device. The degree of graphitization of the graphite negative electrode active material is 88%-93%, and the oil absorption value of the graphite negative electrode active material does not exceed 50 ml/100 g. The graphite negative electrode active material can improve the cycling performance of the battery and prolong the service life of the battery.

## Description

### CROSS-REFERENCE TO RELATED APPLICATIONS

The present disclosure cites Chinese Patent Application No. 202311676609.6, filed on December 7, 2023 and entitled "GRAPHITE NEGATIVE ELECTRODE ACTIVE MATERIAL AND PREPARATION METHOD THEREFOR, SECONDARY BATTERY AND ELECTRICAL DEVICE", which is incorporated herein by reference in its entirety.

### TECHNICAL FIELD

The present disclosure relates to the technical field of secondary batteries and in particular to a graphite negative electrode active material and a preparation method therefor, a secondary battery, and an electrical device.

### BACKGROUND

With the proposal of carbon neutrality goals and policies, the market of secondary batteries for energy storage has been experiencing an explosive growth. For energy storage batteries, a long cycle life is a key indicator, especially for energy storage batteries used for large energy storage power stations. To prolong service life and reduce replacement frequency, it is necessary to further develop an energy storage battery with a longer cycle life.

### SUMMARY

The present disclosure is made in view of the above tasks and aims to provide a graphite negative electrode active material and a preparation method therefor, a secondary battery, and an electrical device. The cycle life of the battery can be effectively improved, and the service life of the battery is prolonged. ...

A first aspect of the present disclosure is to provide a graphite negative electrode active material. A degree of graphitization of the graphite negative electrode active material is 88%-93%, and an oil absorption value of the graphite negative electrode active material is not more than 50 ml/100 g.

On the one hand, by controlling the oil absorption value of the graphite negative electrode active material to be not more than 50 ml/100 g, the graphite negative electrode active material shows good dispersibility in a negative electrode slurry, and the negative electrode slurry has excellent sedimentation resistance. In addition, it is easy to control the coating weight during the coating of the electrode plate, and it is easy to prepare an electrode plate with uniform distribution and uniform thickness of the graphite negative electrode active material, which reduces the possibility of local current density non-uniformity during the charge and discharge process and reduces lithium plating phenomena induced by electrode plate polarization, thus improving the cycling performance and storage performance of a battery and prolonging the service life of the battery. On the other hand, by controlling the degree of graphitization of the graphite negative electrode active material to be 88%-93%, the interlayer spacing of the graphite negative electrode active material is relatively large, which facilitates the rapid deintercalation of active ions. When active ions are intercalated into the negative electrode, the expansion of the graphite negative electrode active material is small, which is beneficial to the long cycling of the battery. In addition, the appropriate degree of graphitization is beneficial to improving the gram capacity of the graphite negative electrode active material, thereby providing a material basis for the preparation of high energy density batteries.

In summary, the graphite negative electrode active material that meets the above requirements is beneficial to improving the cycling performance and storage performance of the battery while the battery exhibits a high energy density.

In any embodiment, the oil absorption value of the graphite negative electrode active material is 30 ml/100 g-43 ml/100 g.

In summary, the smaller the oil absorption value of the graphite negative electrode active material, the better the dispersibility thereof in the negative electrode slurry, which facilitates the preparation of a negative electrode plate with uniform graphite distribution, so that the cycling performance of the battery can be improved. However, when the oil absorption value of the graphite negative electrode active material is too small, higher requirements are imposed on particle regularity or particle size distribution of the graphite negative electrode active material, rendering the cost of the graphite negative electrode active material relatively high, which is not conducive to industrial promotion.

Controlling the oil absorption value of the graphite negative electrode active material within the appropriate range can reduce the cost of the graphite negative electrode active material while satisfying long cycling performance, thereby facilitating industrial production.

In any embodiment, a particle size distribution (Dv90-Dv10)/Dv50 of the graphite negative electrode active material is 1.2-1.6.

By controlling the particle size distribution (Dv90-Dv10)/Dv50 of the graphite negative electrode active material within the above range, on the one hand, the oil absorption value can be regulated and controlled to a relatively low value, which is beneficial to improving the uniformity of the negative electrode slurry and improving the uniformity of the graphite negative electrode active material in the negative electrode plate, while the negative impact of the graphite negative electrode active material with large particle sizes on the cycling performance and storage performance can also be reduced, thereby comprehensively improving the cycling performance and storage performance of the battery.

In any embodiment, based on the total number of particles in the graphite negative electrode active material, a proportion of a number of primary particles in the graphite negative electrode active material is more than or equal to 85%. In some embodiments, the proportion of the number of the primary particles in the graphite negative electrode active material is 85%-100%.

Compared with secondary particles, the primary particles have fewer inter-particle gaps between the particles, and the primary particles have smaller surface edges and corners and smoother particle morphology; in addition, the oil absorption value of the graphite negative active material is smaller, and the leveling performance of the slurry is better, facilitating the preparation of a negative electrode plate with the graphite negative electrode active material uniformly distributed, thus improving the cycling performance of the battery. In addition, compared with the secondary particles, the primary particles have better structural stability and are not easily broken during cycling, thus improving the cycling performance of the battery.

In any embodiment, a specific surface area of the graphite negative electrode active material is less than or equal to 1.4 m²/g. In some embodiments, the specific surface area of the graphite negative electrode active material is 0.6 m²/g-1.3 m²/g.

The graphite negative electrode active material has a low specific surface area, which is beneficial to obtaining a graphite negative electrode active material with a low oil absorption value and also endows the graphite negative electrode active material with a low surface activity, thus reducing the consumption of active ions by SEI film formation and improving the cycling performance and storage performance of the battery.

In any embodiment, a volume distribution particle size Dv50 of the graphite negative electrode active material is 12 µm-16 µm. In some embodiments, a volume distribution particle size Dv50 of the graphite negative electrode active material is 13 µm-15 µm.

The graphite negative electrode active material has a large volume distribution particle size Dv50, and the negative electrode film layer has a large pore size, which is beneficial for an electrolyte solution to fully infiltrate the negative electrode plate, reducing the possibility of partial polarization of the electrode plate, and reducing the impact of black spots appearing at the negative electrode on the cycle life and storage performance of the battery.

In any embodiment, the graphite negative electrode active material satisfies at least one of:
(1) a powder compaction density of the graphite negative electrode active material under a pressure of 49000 N is less than or equal to 1.85 g/cm³. In some embodiments, the powder compaction density of the graphite negative electrode active material under a pressure of 49000 N is 1.70 g/cm³-1.85 g/cm³;
(2) a tap density of the graphite negative electrode active material is 1.2 g/cm³-1.4 g/cm³; and
(3) a gram capacity of the graphite negative electrode active material is more than or equal to 340 mAh/g. In some embodiments, the gram capacity of the graphite negative electrode active material is 341 mAh/g-347 mAh/g.

By controlling the powder compaction density of the graphite negative electrode active material under a pressure of 49000 N within the appropriate range, the cycling performance of the battery can be further improved.

When the tap density of the graphite negative electrode active material is within the above range, the compaction density of the negative electrode plate can be improved, and thus, the energy density of a secondary battery can be improved. It also facilitates the formation of appropriate pore and channel structures between particles of the negative electrode film layer, thereby improving the transmission performance of active ions and electrons, thus improving the cycling performance and storage performance of the secondary battery.

The graphite negative electrode active material has a high gram capacity and provides a material basis for high energy density batteries. In addition, when the gram capacity of the graphite negative electrode active material is within the range, the lattice expansion of the material during cycling is relatively small, the stability of the crystal structure is good, and the irreversible consumption of active ions is reduced, thus improving the cycling performance and storage performance of the battery.

The present disclosure further provides a method for preparing a graphite negative electrode active material, wherein the method comprises the following steps:
providing a raw material;
treating the raw material to obtain a precursor;
performing a graphitization treatment on the precursor to obtain an intermediate product; and
performing a sieving treatment on the intermediate product to obtain a graphite negative electrode active material, where a degree of graphitization of the graphite negative electrode active material is 88%-93%, and an oil absorption value of the graphite negative electrode active material is not more than 50 ml/100 g.

By using the above preparation method, a graphite negative electrode active material with a low oil absorption value and a low degree of graphitization can be prepared, which can improve the cycling performance of the battery and prolong the service life of the battery.

In any embodiment, the raw material includes at least one of petroleum coke, needle coke, and pitch coke. In some embodiments, the raw material is petroleum coke.

Based on the total volume of structures in the raw material, a volume proportion of mosaic and domain structures is more than or equal to 50%. In some embodiments, based on the total volume of structures in the raw material, a volume proportion of mosaic and domain structures is 50%-65%.

In any embodiment, a caking index of the raw material is less than or equal to 10. In some embodiments, the caking index of the raw material is 1-9.

In any embodiment, the precursor satisfies at least one of the following conditions:
a volume distribution particle size Dv50 of the precursor is 12 µm-18 µm; and/or
a particle size distribution (Dv90-Dv10)/Dv50 of the precursor is 1.2-1.8.

Controlling the volume distribution particle size Dv50 or particle size distribution (Dv90-Dv10)/Dv50 of the precursor within the appropriate range is beneficial to controlling the particle size distribution (Dv90-Dv10)/Dv50 of the graphite negative electrode active material within the appropriate range, so as to further regulate and control the oil absorption value of the graphite negative electrode active material within a relatively small range.

In any embodiment, a maximum power of the graphitization treatment is 70%-90% of a rated power of a graphitization apparatus.

In any embodiment, the maximum power of the graphitization treatment is 23000 W-25000 W; and/or the constant power time at the maximum power of the graphitization treatment is 10 h-50 h.

In any embodiment, the sieving treatment on the intermediate product specifically comprises the following steps:
performing the sieving treatment on the intermediate product to remove particles having a maximum particle size Dmax of more than 100 µm from the intermediate product to obtain the graphite negative electrode active material.

By removing particles with large particle sizes from the intermediate product, the negative impact of large particle materials on the cycling performance and storage performance of the battery is reduced.

A third aspect of the present disclosure provides a secondary battery comprising a negative electrode plate. The negative electrode plate comprises a negative electrode current collector and a negative electrode film layer formed on at least one surface of the negative electrode current collector. The negative electrode film layer comprises the graphite negative electrode active material according to the first aspect of the present disclosure or a graphite negative electrode active material prepared by the preparation method according to the second aspect.

In any embodiment, the negative electrode film layer comprises a conductive agent, and based on a mass of the negative electrode film layer, a mass content of the conductive agent is more than or equal to 1.5%. In some embodiments, the mass content of the conductive agent is 1.8%-2.5%.

A fourth aspect of the present disclosure provides an electrical device, including the secondary battery according to the third aspect of the present disclosure.

### BRIEF DESCRIPTION OF THE DRAWINGS

FIG. 1 is a schematic view of a secondary battery according to an embodiment of the present disclosure.
FIG. 2 is an exploded view of the secondary battery according to an embodiment of the present disclosure as shown in FIG. 1.
FIG. 3 is a schematic view of a battery module according to an embodiment of the present disclosure.
FIG. 4 is a schematic view of a battery pack according to an embodiment of the present disclosure.
FIG. 5 is an exploded view of the battery pack according to an embodiment of the present disclosure as shown in FIG. 4.
FIG. 6 is a schematic view of an electrical device in which a secondary battery serves as a power source according to an embodiment of the present disclosure.

Description of reference numerals:
1 Battery pack; 2 upper box; 3 lower box; 4 battery module; 5 secondary battery; 51 case; 52 electrode assembly; and 53 top cover assembly.

### DETAILED DESCRIPTION

Hereinafter, embodiments of the graphite negative electrode active material and the preparation method therefor, the secondary battery, and the electrical device according to the present disclosure are specifically disclosed with appropriate reference to the detailed description of the accompanying drawings. However, there are situations where unnecessary detailed explanations are omitted. For example, there are situations where detailed explanations of well-known matters and repeated explanations of actually the same structure are omitted. This is to prevent the following description from becoming unnecessarily lengthy and to facilitate the understanding of those skilled in the art. In addition, the drawings and subsequent descriptions are provided for those skilled in the art to fully understand the present disclosure and are not intended to limit the subject matter defined in the claims.

The "ranges" disclosed in the present disclosure are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present disclosure, unless otherwise specified, the numerical range "a-b" represents an abbreviated representation of any combination of real numbers between a and b, where a and b are both real numbers. For example, the numerical range "0-5" indicates that all real numbers between "0-5" have been listed herein, and "0-5" is only a shortened representation of these numerical combinations. In addition, when a parameter is expressed as an integer ≥ 2, it is equivalent to disclosing that the parameter is, for example, an integer of 2, 3, 4, 5, 6, 7, 8, 9, 10, 11, 12, etc.

Unless otherwise specified, all the embodiments and optional embodiments of the present disclosure can be combined with each other form new technical solutions.

Unless otherwise specified, all technical features and optional technical features of the present disclosure can be combined with each other to form new technical solutions.

Unless otherwise specified, all the steps in the present disclosure can be carried out, either in order or randomly, preferably in order. For example, the method includes steps (a) and (b), which means that the method may include steps (a) and (b) performed in order, or may include steps (b) and (a) performed in order. For example, reference to "the method may further include step (c)" indicates that step (c) may be added to the method in any order, for example, the method may include steps (a), (b), and (c), or steps (a), (c), and (b), or steps (c), (a), and (b), etc.

Unless otherwise specifically stated, "including" and "comprising" mentioned in the present disclosure indicate either open inclusion or closed inclusion. For example, the terms "including" and "comprising" may indicate that other components not listed may be further included or comprised, or only the listed components may be included or comprised.

Unless otherwise specifically stated, in the present disclosure, the term "or" is inclusive. By way of example, the phrase "A or B" indicates "A, B, or both A and B". More specifically, any of the following conditions satisfies the condition "A or B": A is true (or present) and B is false (or absent); A is false (or absent) and B is true (or present); or both A and B are true (or present).

The negative electrode active material is a main material of the battery. A purpose of storing electricity is achieved by storing lithium in the negative electrode active material during charging. The performance of the negative electrode active material has an important impact on the cycle life of the battery. In the prior art, to obtain a long-cycle battery, parameters such as a degree of graphitization of the negative electrode active material or a compaction density of the negative electrode plate are generally controlled, so as to obtain a long-cycle life battery. However, another factor that affects capacity attenuation is the uniformity of the active material in the negative electrode plate. If the negative electrode active material is not uniformly mixed with a conductive agent, a binder, etc. during the preparation of the negative electrode slurry, the negative electrode slurry will exhibit sedimentation or agglomeration phenomena, and the active material in the negative electrode plate formed by coating is not uniformly distributed or the thickness of the electrode plate is not uniform, which easily leads to local current non-uniformity during cycling, causing a difference in the diffusion concentration of active ions that leads to lithium plating and thus capacity attenuation, thus affecting the cycling performance and storage performance of the battery.

### [Graphite negative electrode active material]

On this basis, the present disclosure provides a graphite negative electrode active material. A degree of graphitization of the graphite negative electrode active material is 88%-93%, and an oil absorption value of the graphite negative electrode active material is not more than 50 milliliters (ml)/100 grams (g).

In some embodiments, the degree of graphitization of the graphite negative electrode active material is any value of or in a range formed by any two values of 88%, 89%, 90%, 91%, 92%, and 93%.

Herein, the term "degree of graphitization" macroscopically characterizes how much proportion of a material achieves a complete graphite crystal structure; microscopically, it refers to the extent to which carbon structures in various transitional states approach the ideal graphite crystal.

The degree of graphitization of the graphite negative electrode active material reflects the degree of integrity of the graphite crystal structure in the material, i.e., the degree of regularity of the carbon atom arrangement in the graphite structure in the material. The higher the degree of graphitization of the material, the smaller the spacing between graphite layers, the smaller the lattice rotation, and the less the disordered stacking of graphene layers; in addition, the arrangement is ordered, and the gram capacity of the material is high, which is beneficial to obtaining a high energy density secondary battery. A low degree of graphitization of the material indicates a large graphite spacing, which facilitates the rapid deintercalation of active ions and results in a small expansion of the material during lithium intercalation, achieving shallow charge and shallow discharge, which is beneficial to long cycling and long storage.

In the present disclosure, the degree of graphitization of the graphite negative electrode active material can be tested by instruments and methods known in the art. For example, X-ray diffractometers (such as Bruker D8 Discover) can be used for testing. For testing, reference can be made to JISK 0131-1996 and JB/T 4220-2011 to obtain the average interlayer spacing d₀₀₂ of C(002) crystal plane in the crystal structure of the material, and then, the degree of graphitization is calculated according to the formula g = (0.344-d₀₀₂)/(0.344-0.3354) × 100%. In the above formula, d₀₀₂ is the average interlayer spacing of C(002) crystal plane in the crystal structure of the material, as expressed in nanometers (nm).

In some embodiments, the oil absorption value of the graphite negative electrode active material is any one of not more than 30 ml/100 g, not more than 35 ml/100 g, not more than 40 ml/100 g, not more than 45 ml/100 g, and not more than 50 ml/100 g.

Herein, the term "oil absorption value" refers to the volume of linseed oil that can be absorbed by 100 g of the graphite negative electrode active material. For example, the oil absorption value of the graphite negative electrode active material is 40 ml/100 g, which means that 100 g of the graphite negative electrode active material can absorb 40 ml of linseed oil.

The oil absorption value of the graphite negative electrode active material can be tested by methods and devices known in the art, as exemplified below: samples of a test oil and a graphite negative electrode active material sample are respectively obtained, and a torque threshold of an oil absorption value tester is set; the oil is added to the sample in a mixing chamber of the oil absorption tester at a constant rate, and with the increase of the oil absorption of the sample, the viscosity of the mixture of the sample and the oil increases continuously; when the viscosity of the mixture reaches the preset torque threshold of the oil absorption tester, the operation is stopped, and the volume of the oil absorbed per unit mass of the sample was calculated, which is the oil absorption value QI of the sample. The test oil is linseed oil (DBP), and the torque threshold is 1 newton (N).

The oil absorption value of the graphite negative electrode active material is mainly related to the specific surface area of the material, the surface nature of the material, the particle shape of the material, and the particle size distribution of the material. The oil absorption value of the graphite negative electrode active material reflects the dispersibility of the material in the negative electrode slurry. The material has a small oil absorption value and excellent dispersibility in the negative electrode slurry, and the negative electrode slurry has excellent sedimentation resistance and dispersibility, and the negative electrode slurry has excellent sedimentation resistance and dispersibility. In addition, it is easy to control the coating weight during the coating of the electrode plate and prepare a negative electrode plate with uniform distribution and uniform thickness of the graphite negative electrode active material, which reduces the possibility of local current density non-uniformity during the charge and discharge process and reduces lithium plating phenomena induced by electrode plate polarization, thus improving the cycling performance of the battery and prolonging the service life and storage life of the battery.

In summary, the graphite negative electrode active material has appropriate ranges of degree of graphitization and oil absorption value, which are beneficial to improving the cycling performance and storage performance of the battery while the battery exhibits a high energy density.

In some embodiments, the oil absorption value of the graphite negative electrode active material is 30 ml/100 g-43 ml/100 g.

In some embodiments, the oil absorption value of the graphite negative electrode active material is any value of or in a range formed by any two values of 30 ml/100 g, 32 ml/100 g, 34 ml/100 g, 36 ml/100 g, 38 ml/100 g, 40 ml/100 g, 42 ml/100 g, and 43 ml/100 g.

As described hereinbefore, the smaller the oil absorption value of the graphite negative electrode active material, the better the dispersibility thereof in the negative electrode slurry, which facilitates the preparation of a negative electrode plate with uniform graphite distribution, so that the cycling performance of the battery can be improved. However, when the oil absorption value of the graphite negative electrode active material is too small, higher requirements are imposed on particle regularity or particle size distribution of the graphite negative electrode active material, rendering the cost of the graphite negative electrode active material relatively high, which is not conducive to industrial promotion.

Controlling the oil absorption value of the graphite negative electrode active material within the appropriate range can reduce the cost of the graphite negative electrode active material while satisfying long cycling performance, thereby facilitating industrial production.

In some embodiments, a particle size distribution (Dv90-Dv10)/Dv50 of the graphite negative electrode active material is 1.2-1.6.

In some embodiments, the particle size distribution (Dv90-Dv10)/Dv50 of the graphite negative electrode active material is any value of or in a range formed by any two values of 1.2, 1.3, 1.4, 1.5, and 1.6.

The volume distribution particle sizes Dv10, Dv50, and Dv90 of the graphite negative electrode active material respectively represent corresponding particle sizes at which the cumulative volume distribution percentage of the material reaches 10%, 50%, and 90%, which can be determined by instruments and methods known in the art. For example, determination can be made conveniently by a laser particle size analyzer with reference to GB/T 19077-2016 Particle size analysis - Laser diffraction methods. The test instrument can be Model Mastersizer 3000 laser particle size analyzer from Malvern Instruments Inc., UK.

The particle size distribution (Dv90-Dv10)/Dv50 of the graphite negative electrode active material affects the oil absorption value of the material. When the particle size distribution (Dv90-Dv10)/Dv50 of the graphite negative electrode active material is too large, the oil absorption value of the graphite negative electrode active material is relatively large. Particles with medium to small particle sizes and particles with large particle sizes in the graphite negative electrode active material hinder the dispersion of the graphite negative electrode active material in the negative electrode slurry, which adversely affects the electrode plate in terms of uniformity and thickness and deteriorates the cycling performance of the battery. When the particle size distribution (Dv90-Dv10)/Dv50 of the graphite negative electrode active material is too small, the process of preparing the graphite negative electrode active material is relatively complex, causing the yield of the graphite negative electrode active material to be significantly reduced, leading to a significant increase in cost.

In summary, when the particle size distribution (Dv90-Dv10)/Dv50 of the graphite negative electrode active material is in the appropriate range, the oil absorption value of the graphite negative electrode active material is relatively low, and the cycling performance of the battery is excellent; in addition, the cost of the graphite negative electrode active material can also be reduced, thereby facilitating industrial application.

In some embodiments, based on the total number of particles in the graphite negative electrode active material, a proportion of a number of primary particles in the graphite negative electrode active material is more than or equal to 85%.

In some embodiments, based on the total number of particles in the graphite negative electrode active material, a proportion of a number of primary particles in the graphite negative electrode active material is 85%-100%.

In some embodiments, based on the total number of particles in the graphite negative electrode active material, the proportion of the number of primary particles in the graphite negative electrode active material is any value of or in a range formed by any two values of 85%, 90%, 95%, and 100%.

In some embodiments, particles in the graphite negative electrode active material include primary particles and secondary particles. Herein, "primary particles", also known as single particles, usually refers to non-agglomerated particles. "Secondary particles" refers to agglomerated particles formed after agglomeration between a plurality of original particles or primary particles. The action force of agglomeration between particles can be facilitated by other substances (such as viscous chemical substances) that assist in agglomeration.

The proportion of the number of primary particles can be determined by instruments and methods known in the art. By way of example, the graphite negative electrode active material is laid and adhered to a conductive adhesive to prepare a sample to be tested with length × width = 6 (cm) × 1.1 cm. The morphology of particles in the sample to be tested is tested by using a scanning electron microscope and an energy dispersive spectrometer (e.g., ZEISS SEM (sigma300)). The test can be carried out with reference to JY/T010-1996. To ensure the accuracy of the test results, a plurality of (for example, 10 or 20) different areas can be randomly selected in the sample to be tested for a scanning test, and the number of secondary particles and the total number of particles in the test areas are counted at a particular amplification factor (for example, 500 folds or 1000 folds). The ratio of the number of primary particles to the total number of particles in any test area is namely the proportion of the number of the primary particles in that area. The average of the test results in 10 test areas is taken as the proportion of the number of the primary particles. To ensure the accuracy of the results, it is also possible to prepare a plurality of samples to be tested (for example, 5 or 10 samples) to repeat the above test. The average of the test results of these samples to be tested is taken as the proportion of the number of primary particles in the graphite negative electrode active material.

Compared with secondary particles, the primary particles have fewer inter-particle gaps between the particles, and the primary particles have smaller surface edges and corners and smoother particle morphology; in addition, the oil absorption value of the graphite negative active material is smaller, and the leveling performance of the slurry is better, facilitating the preparation of a negative electrode plate with the graphite negative electrode active material uniformly distributed, thus improving the cycling performance of the battery. In addition, compared with the secondary particles, the primary particles have better structural stability and are not easily broken during cycling, thus improving the cycling performance of the battery.

In some embodiments, a specific surface area of the graphite negative electrode active material is less than or equal to 1.4 square meters per gram (m²/g).

In some embodiments, the specific surface area of the graphite negative electrode active material is any value of or in a range formed by any two values of 0.4 m²/g, 0.5 m²/g, 0.6 m²/g, 0.7 m²/g, 0.75 m²/g, 0.85 m²/g, 0.85 m²/g, 1.05 m²/g, 1.15 m²/g, 1.25 m²/g, 1.3 m²/g, and 1.4 m²/g.

Herein, the term "specific surface area" refers to the sum of the total external surface areas of all particles per each gram of a material.

The specific surface area of the graphite negative electrode active material can be determined by instruments and methods well known in the art. For example, with reference to GB/T 19587-2017, a nitrogen adsorption specific surface area analysis test method can be used for testing, and a BET (Brunauer Emmett Teller) method is used for calculation, where the nitrogen adsorption specific surface area analysis test can be carried out using Model Tri-Star 3020 specific surface area analysis tester available from Micromeritics, the United States.

The specific surface area of the graphite negative electrode active material affects the oil absorption value of the material. A low specific surface area results in a low oil absorption value, improves the distribution uniformity of the graphite negative electrode active material in the negative electrode plate and the thickness uniformity of the electrode plate, and improves the cycling performance and storage performance of the battery; in addition, the graphite negative electrode active material has a low specific surface area, which endows the material with a low specific activity, thus reducing the consumption of active ions by SEI film formation and improving the cycling performance and storage performance of the battery.

In some embodiments, the specific surface area of the graphite negative electrode active material is 0.6 m²/g-1.3 m²/g.

In some embodiments, the specific surface area of the graphite negative electrode active material is any value of or in a range formed by any two values of 0.6 m²/g, 0.7 m²/g, 0.75 m²/g, 0.85 m²/g, 0.85 m²/g, 1.05 m²/g, 1.15 m²/g, 1.25 m²/g, and 1.3 m²/g.

As described hereinbefore, the graphite negative electrode active material has a small specific surface area and a low oil absorption value, which is beneficial to the cycle life of the battery. However, an excessively small specific surface area affects the wettability of the electrolyte solution to the electrode plate, affecting the kinetic performance of the electrode plate, easily causing lithium plating phenomena that affects the cycle life and storage life of the battery. The appropriate range of specific surface area can further improve the cycle life and storage life of the battery.

In some embodiments, the volume distribution particle size Dv50 of the graphite negative electrode active material is 12 microns (µm)-16 µm.

In some embodiments, the volume distribution particle size Dv50 of the graphite negative electrode active material is any value of or in a range formed by any two values of 12 µm, 12.5 µm, 13 µm, 13.5 µm, 14 µm, 14.5 µm, 15 µm, 15.5 µm, and 16 µm.

The graphite negative electrode active material has a large volume distribution particle size Dv50, and the negative electrode film layer has a large pore size, which is beneficial for an electrolyte solution to fully infiltrate the negative electrode plate, reducing the possibility of partial polarization of the electrode plate, and reducing the impact of black spots appearing at the negative electrode on the cycle life and storage performance of the battery.

In some embodiments, the volume distribution particle size Dv50 of the graphite negative electrode active material is 13 µm-15 µm.

In some embodiments, the volume distribution particle size Dv50 of the graphite negative electrode active material is any value of or in a range formed by any two values of 13 µm, 13.5 µm, 14 µm, 14.5 µm, and 15 µm.

The graphite negative electrode active material has an appropriate large volume distribution particle size Dv50, and the negative electrode film layer has an appropriate large pore size, which is beneficial for an electrolyte solution to fully infiltrate the negative electrode plate, reducing the possibility of partial polarization of the electrode plate, and reducing the impact of black spots appearing at the negative electrode on the cycle life and storage performance of the battery. In addition, it is beneficial to improving the transmission performance of active ions and electrons. The electrode plate has excellent dynamic performance and reduces the impact of a lithium plating phenomenon on the life of the battery.

In some embodiments, the powder compaction density of the graphite negative electrode active material under a pressure of 49000 N is less than or equal to 1.85 grams per cubic centimeter (g/cm³).

Herein, the term "powder compaction density" refers to the density of the powder to be tested under a preset pressure.

The measurement method for powder compaction density can be carried out using any known method in the art. By way of example, with reference to GB/T 24533-2009, 1 g of the graphite negative electrode active material is weighed and added to a mold having a bottom surface area of 1.327 square centers (cm²), the mold is pressurized to a specific pressure, e.g., 49000 N, the pressure is maintained for 30 seconds (s) and then released, and after maintaining for 10 s, the powder compaction density of the graphite negative electrode active material under the selected pressure is determined by an electronic pressure tester (e.g., Model UTM7305 electronic pressure tester).

When the powder compaction density of the graphite of the graphite negative electrode active material under a pressure of 49000 N is more than 1.85 g/cm³, the strength of particles in the graphite negative electrode active material is not enough, which makes it difficult to maintain the original pore structure of the electrode plate due to continuous squeezing during cycling, so that the tortuosity of the electrode plate changes, thereby causing an increased lithium ion intercalation path, affecting the dynamic performance of the battery, which is detrimental to achieving long-term cycling stability.

In some embodiments, the powder compaction density of the graphite negative electrode active material under a pressure of 49000 N is 1.70 g/cm³-1.85 g/cm³. In some embodiments, the powder compaction density of the graphite negative electrode active material under a pressure of 49000 N is any value of or in a range formed by any two values of 1.70 g/cm³, 1.72 g/cm³, 1.74 g/cm³, 1.76 g/cm³, 1.78 g/cm³, 1.80 g/cm³, 182 g/cm³, 1.84 g/cm³, and 1.85 g/cm³.

As described hereinbefore, the powder compaction density of the graphite negative electrode active material under a pressure of 49000 N is less than or equal to 1.85 g/cm³, which is beneficial to improving the cycling performance of the battery. In addition, the powder compaction density of the graphite negative electrode active material under a pressure of 49000 N also affects the energy density of the battery. The higher the powder compaction density, the greater the compaction density of the negative electrode film layer, the more beneficial it is to increase the energy density of the secondary battery.

By controlling the powder compaction density of the graphite negative electrode active material under a pressure of 49000 N within the appropriate range, a high energy density of the battery can be achieved while the cycle life of the battery is improved.

In some embodiments, the tap density of the graphite negative electrode active material is 1.2 g/cm³-1.4 g/cm³. In some embodiments, the tap density of the graphite negative electrode active material is any value of or in a range formed by any two values of 1.2 g/cm³, 1.25 g/cm³, 1.30 g/cm³, 1.35 g/cm³, and 1.4 g/cm³.

Herein, the term "tap density" refers to the density of a powder material after vibration compression under particular conditions.

The measurement method for tap density can be carried out by using any known method in the art. By way of example, the measurement method can be carried out with reference to GB/T 5162-2006 by using a powder tap density tester. The test instrument can be Dandong Bettersize BT-301.

When the tap density of the graphite negative electrode active material is within the above range, the compaction density of the negative electrode plate can be improved, and thus, the energy density of a secondary battery can be improved. It also facilitates the formation of appropriate pore and channel structures between particles of the negative electrode film layer, thereby improving the transmission performance of active ions and electrons, thus improving the cycling performance and storage performance of the secondary battery.

In some embodiments, the gram capacity of the graphite negative electrode active material is more than or equal to 340 milliampere-hours per gram (mAh/g). In some embodiments, the gram capacity of the graphite negative electrode active material is any value of or in a range formed by any two values of 340 mAh/g, 341 mAh/g, 342 mAh/g, 343 mAh/g, 344 mAh/g, 345 mAh/g, 346 mAh/g, 347 mAh/g, 349 mAh/g, 350 mAh/g, 351 mAh/g, and 352 mAh/g.

The measurement method for gram capacity can be carried out by using any known method in the art. By way of example, a graphite negative electrode active material sample can be fully mixed under stirring with the conductive agent carbon black and polyvinylidene fluoride (PVDF) in an appropriate amount of the solvent NMP in a mass ratio of 91.6:1.8:6.6 to form a uniform negative electrode slurry; the negative electrode slurry is uniformly applied to a surface of a copper foil as a negative electrode current collector, dried, and cold-pressed; and thereafter, with a lithium metal plate as a counter electrode and a polypropylene (PP) thin film as a separator, an electrolyte solution is injected, where the electrolyte solution used is formulated by: mixing dimethyl carbonate (DMC), ethyl methyl carbonate (EMC), and ethylene carbonate (EC) in a weight ratio of 1:1:1 to obtain an organic solvent and then dissolving LiPF₆ in the above organic solvent to prepare an electrolyte solution with a concentration of 1.0 mole per liter (mol/L). In an argon-protected glove box, a CR2430 button battery is assembled. At 25 degrees Celsius (°C), the button battery prepared above is first galvanostatically discharged to 0.005 volts (V) at a current of 0.05 coulombs (C), then galvanostatically discharged to 0.005 V at 10 microamperes (µA), and left to stand for 5 minutes (min), and the first-cycle discharge capacity of the button battery is recorded; thereafter, it is galvanostatically charged to 2.0 V at a current of 0.1 C, and the charge capacity of the button battery is recorded. The ratio of the charge capacity of the button battery to the mass of the graphite negative electrode active material sample is namely the gram capacity of the graphite negative electrode active material sample.

The graphite negative electrode active material has excellent gram capacity and can improve the energy density of the secondary battery.

In some embodiments, the gram capacity of the graphite negative electrode active material is 341 mAh/g-347 mAh/g. In some embodiments, the gram capacity of the graphite negative electrode active material is any value of or in a range formed by any two values of 341 mAh/g, 342 mAh/g, 343 mAh/g, 344 mAh/g, 345 mAh/g, 346 mAh/g, and 347 mAh/g.

When the gram capacity of the graphite negative electrode active material is within the range, the lattice expansion of the material during cycling is relatively small, the stability of the crystal structure is good, and the irreversible consumption of active ions is reduced, thus improving the cycling performance and storage performance of the battery.

An embodiment of the present disclosure further provides a method for preparing a graphite negative electrode active material. The method comprises the following steps:
providing a raw material;
treating the raw material to obtain a precursor;
performing a graphitization treatment on the precursor to obtain an intermediate product; and
performing a sieving treatment on the intermediate product to obtain a graphite negative electrode active material, where a degree of graphitization of the graphite negative electrode active material is 88%-93%, and an oil absorption value of the graphite negative electrode active material is not more than 50 ml/100 g.

By using the above preparation method, a graphite negative electrode active material with a low oil absorption value and a low degree of graphitization can be prepared, which can further improve the cycling performance of the battery and prolong the service life of the battery.

In some embodiments, the raw material includes at least one of petroleum coke, needle coke, and pitch coke.

Herein, the term "petroleum coke" refers to coke formed after high-temperature carbonization of petroleum residue oil or petroleum pitch.

Herein, the term "needle coke" refers to needle-like texture coke that can be generated by subjecting coal tar pitch or petroleum pitch to liquid phase carbonization to an anisotropic intermediate phase, followed by processes such as high-temperature carbonization.

Herein, the term "pitch coke" refers to a solid material produced by high-temperature carbonization of coal tar pitch.

In some embodiments, the raw material includes petroleum coke.

Petroleum coke has excellent anisotropy, which facilitates the preparation of a graphite negative electrode active material with a low degree of graphitization and a low expansion and is conducive to the long cycle life of the battery. In addition, petroleum coke has a high compaction density and a high gram capacity, which is beneficial to improving the energy density of the battery. In addition, petroleum coke has a wider source, which is conducive to industrial production.

Based on the total volume of structures in the raw material, a volume proportion of mosaic and domain structures is more than or equal to 50%.

Based on the morphological characteristics and isochromatic zone sizes of a coke material as observed under a polarized light microscope, the microstructure of the coke material can be classified into three types: mosaic, domain, and fibrous. Generally, the microstructure of isochromatic zones with a size of less than 30 µm is classified as mosaic type, the microstructure of isochromatic zones with a size of more than 30 µm is classified as domain type, and an anisotropic banded isochromatic zone is classified as fibrous type.

In the present disclosure, the volume ratio of mosaic and domain structures in the raw material can be tested by methods known in the art. By way of example, a raw material is taken as specified by GB 1997-89, the raw material is crushed into 1 millimeters (mm) and mixed uniformly, 40 g-50 g is obtained by sample reduction, and 4 g-5 g of a 0.07 mm-1.0 mm fraction specimen is taken by using a square-mesh sieve for section making; as specified by MT 116.1-86, polished sections of powdered coke and lump coke are prepared, where the diameter of the polished sections of powdered coke shall not be less than 22 mm, and the volume of a binder shall occupy less than 1/3; and a specimen is placed on a glass slide with adhesive clay, flattened, and then placed on an objective table for focusing, and after the microscope is calibrated, a polarizer and an analyzer are adjusted to achieve orthogonal alignment. An azurite test plate (1λ) is inserted to achieve a first-order red interference color in a field of view; and a step size of a mechanical stage is determined to ensure uniform distribution of 400 or more valid measurement points, with a point spacing of 0.3 mm-0.5 mm and a line spacing of generally 0.5 mm-0.8 mm as appropriate. Starting from one end of the specimen, the microstructure category at the intersection of crosshairs is identified. The volume proportion of mosaic and domain structures in the raw material is derived by dividing the number of valid measurement points corresponding to optical textures of mosaic and domain structures by the total number of the counted test points.

In some embodiments, based on the total volume of structures in the raw material, a volume proportion of mosaic and domain structures is 50%-65%. In some embodiments, based on the total volume of structures in the raw material, the volume proportion of mosaic and domain structures is any value of or in a range formed by any two values of 50%, 55%, 60%, and 65%.

As described hereinbefore, a high volume proportion of mosaic and domain structures is beneficial to obtaining a graphite negative electrode active material having a low oil absorption value. However, an excessively high volume proportion of mosaic and domain structures affects the gram capacity of the graphite negative electrode active material and the energy density of the battery.

In some embodiments, the caking index of the raw material is less than or equal to 10. In some embodiments, the caking index of the raw material is any value of or in a range formed by any two values of 1, 2, 3, 4, 5, 6, 7, 8, 9, and 10.

In some embodiments, the caking index of the raw material is less than or equal to 1-9. In some embodiments, the caking index of the raw material is any value of or in a range formed by any two values of 1, 2, 3, 4, 5, 6, 7, 8, and 9.

Herein, the term "caking index" is used to characterize the caking property of a raw material, which means the ability of the material to form a plastic colloid during high-temperature heating that binds either itself or added inert substances and has a specific mechanical strength. It is a manifestation of the combined action of surface bonding and internal forces (adhesion and cohesion) of a colloidal substance.

In the present disclosure, the caking index of the raw material can be tested by using methods known in the art. By way of example, with reference to GB/T 5447-2014/ISO 15585:2006, the caking index test is carried out by using TX-600. Firstly, 200 g of a sample was taken and placed in a drying oven at 100°C for 1 hour; the dried sample was passed through a set of sieves with apertures of 200 µm + 100 µm, and a sample that is undersized below 200 µm and oversized above 100 µm is taken; 3.00 ± 0.001 g of specialized anthracite is then weighed, 3.00 ± 0.001 g of a test sample is further weighed, placed in a crucible, and stirred and mixed uniformly; a press block is clamped by tweezers and placed in a center of the crucible, it is then placed under a pressure device, and a pressure bar is gently put down for pressurization for 30 s; the crucible is quickly put into a preheated muffle furnace (850°C) and heated for 15 min; the temperature of the muffle furnace is maintained at 850°C ± 10°C all the time during heating; after the crucible is taken out of the furnace and cooled, the total weight of the sample is measured as m, and the sample is then put into a rotary drum apparatus for a drum rotation experiment; the sample having undergone drum rotation is sieved with a 1 mm round hole sieve, and the weight of the oversize material is weighed and denoted as m1; the oversize material is put into a rotary drum for a second rotary drum test, followed by sieving, and the oversize material is weighed and denoted as m2; and according to the formula G = (30*m1 + 70*m2)/(5*m), the caking index G is calculated.

If the caking index of the raw material is too high, the material is prone to caking during heat treatment, and secondary particles are easily formed, so that the graphite negative electrode active material has a relatively irregular morphology and a relatively large oil absorption value, which is not conducive to the dispersion of the negative electrode slurry and affects the cycling performance and storage performance of the battery.

In some embodiments, the treatment of the raw material specifically comprises the following steps:
crushing, shaping, and classifying the raw material to obtain a secondary raw material; and
removing part of fine powder from the secondary raw material to obtain a precursor.

In some embodiments, in the step of crushing the raw material, a crusher, such as a jaw crusher, can be used to crush the raw material. For example, the raw material can be first crushed into a set particle size before the sieving treatment.

In some embodiments, in the step of shaping the raw material, a shaping machine can be used to shape the crushed raw material. The shaping treatment can reduce burrs on a surface of the crushed raw material, which is beneficial to obtaining a rounded graphite negative electrode active material, thereby obtaining a graphite negative electrode active material with a low oil absorption value.

In some embodiments, in the step of classifying the raw material, an air classifier can be used to classify the shaped raw material. In some embodiments, the induced draft frequency can be more than or equal to 20 hertz (Hz), and the classification frequency can be more than or equal to 65 Hz. The classification treatment can reduce the content of large particles and small particles in the precursor.

In some embodiments, the volume distribution particle size Dv50 of the precursor is 12 µm-18 µm. In some embodiments, the volume distribution particle size Dv50 of the precursor is any value of or in a range formed by any two values of 12 µm, 13 µm, 14 µm, 15 µm, 16 µm, 17 µm, and 18 µm.

In some embodiments, the particle size distribution (Dv90-Dv10)/Dv50 of the precursor is 1.2-1.8. In some embodiments, the particle size distribution (Dv90-Dv10)/Dv50 of the precursor is any value of or in a range formed by any two values of 1.2, 1.3, 1.4, 1.5, 1.6, 1.7, and 1.8.

Controlling the volume distribution particle size Dv50 or particle size distribution (Dv90-Dv10)/Dv50 of the precursor within the appropriate range is beneficial to controlling the particle size distribution (Dv90-Dv10)/Dv50 of the graphite negative electrode active material within the appropriate range, so as to further regulate and control the oil absorption value of the graphite negative electrode active material within a relatively small range.

Herein, the term "graphitization treatment" refers to a heat treatment process of a carbon material, in which under the action of a high temperature, the carbon material is transformed from a two-dimensional structure carbon network to a three-dimensional ordered structure by means of "microcrystal" growth.

In some embodiments, the maximum power of the graphitization treatment is 70%-90% of a rated power of a graphitization treatment apparatus.

In some embodiments, the maximum power of the graphitization treatment is 70%, 75%, 80%, 85%, or 90% of the rated power of the graphitization treatment apparatus, or in a numerical range between any two thereof. It can be understood that the graphitization treatment apparatus refers to any device capable of performing the graphitization treatment, including but not limited to Acheson furnaces, box furnaces, internal series furnaces, continuous graphitization, electric calcination furnaces, medium-frequency furnaces, tube furnaces, and other devices. The rated power of graphitization treatment apparatuses from different manufacturers may vary and can be selected based on actual requirements as appropriate.

The maximum power applied during graphitization in the present disclosure should be lower than the rated power of the graphitization treatment apparatus so as to achieve temperature field uniformity during the graphitization treatment. This guarantees consistency in the gram capacity of the material, which is beneficial to improving the cycle life of the battery.

In some embodiments, the graphitization treatment apparatus is an internal series furnace, and the rated power of the internal series furnace is 25000 watts (W)-32000 W.

In some embodiments, the graphitization treatment apparatus is an Acheson furnace, and the rated power of the Acheson furnace is 28000 W-30000 W.

In some embodiments, the maximum power of the graphitization treatment is 23000 W-25000 W.

For example, the maximum power of the graphitization treatment is 23000 W, 23500 W, 24000 W, 24500 W, 25000 W or in a numerical range between any two thereof.

By controlling the maximum power of the graphitization treatment, the degree of graphitization of the graphite negative electrode active material during heat treatment can be effectively controlled, which is beneficial to improving the cycle life of the battery.

In some embodiments, a constant power time at the maximum power of the graphitization treatment is 10 hours (h)-50 h.

In some embodiments, the constant power time at the maximum power of the graphitization treatment is 10 h, 13 h, 16 h, 19 h, 22 h, 25 h, 28 h, 31 h, 33 h, 36 h, 39 h, 42 h, 45 h, 48 h, or 50 h or in a numerical range between any two thereof.

In some embodiments, the graphitization treatment apparatus is an internal series furnace, and the constant power time at the maximum power of the graphitization treatment is 10 h-30 h.

In some embodiments, the graphitization treatment apparatus is an Acheson furnace, and the constant power time at the maximum power of the graphitization treatment is 30 h-50 h.

An appropriate constant power time at the maximum power is not only less likely to cause excessive rearrangement of the precursor, enabling effective reduction in the specific surface area of the graphite negative electrode active material, thereby improving the cycling performance of the battery, but can also effectively improve the gram capacity of the graphite negative electrode active material, thereby benefiting the energy density of the secondary battery.

In some embodiments, the sieving treatment on the intermediate product specifically comprises the following steps:
performing the sieving treatment on the intermediate product to remove particles having a maximum particle size Dmax of more than 100 µm from the intermediate product to obtain the graphite negative electrode active material.

By removing particles with large particle sizes from the intermediate product, the negative impact of large particle materials on the cycling performance and storage performance of the battery is reduced.

In addition, the secondary battery, battery module, battery pack, and electrical device of the present disclosure are described below with appropriate reference to the accompanying drawings.

### [Negative electrode plate]

The negative electrode plate comprises a negative electrode current collector and a negative electrode film layer arranged on at least one surface of the negative electrode current collector. The negative electrode film layer comprises the graphite negative electrode active material according to the first aspect in the embodiments of the present disclosure or a graphite negative electrode active material prepared by the preparation method according to the second aspect in the embodiments of the present disclosure.

In some embodiments, the negative electrode film layer comprises a conductive agent, and based on a mass of the negative electrode film layer, a mass content of the conductive agent is more than or equal to 1.5%.

In some embodiments, based on the total mass of the negative electrode film layer, the mass proportion of the conductive agent is 1.5%, 1.6%, 1.7%, 1.8%, 1.9%, 2, 2.1%, 2.2%, 2.3%, 2.4%, 2.5%, 3.0%, 3.1%, 3.2%, 3.2%, or 3.3% or in a numerical range between any two thereof.

During the cycling of the battery, active ions are continuously intercalated and deintercalated in the lattice of the graphite negative electrode active material, and the graphite negative electrode active material is prone to particle "isolation", thus losing electrochemical activity, causing local current non-uniformity and polarization, thereby accelerating capacity attenuation, leading to battery performance "plummet". To solve the above problems, a relatively high amount of a conductive agent is usually added to the negative electrode film layer to effectively enhance the electrical contact between the graphite negative electrode active material and the graphite negative electrode active material and improve the cycling stability of the battery. However, the addition of a high amount of a conductive agent to the negative electrode slurry affects the dispersibility of the negative electrode slurry. The graphite negative electrode active material with a low oil absorption value according to the present disclosure has excellent dispersibility in the negative electrode slurry, which can make up for the impact of the high content of the conductive agent on the dispersibility of the negative electrode slurry.

When a high content of the conductive agent is combined with the graphite negative electrode active material with a low oil absorption value, the negative electrode slurry shows good dispersibility, the electrode plate has excellent uniformity, and the graphite negative electrode active material has good electrical contact, thereby comprehensively improving the cycling performance of the battery.

In some embodiments, based on the mass of the negative electrode film layer, a mass content of the conductive agent is 1.8%-2.5%. In some embodiments, based on the total mass of the negative electrode film layer, the mass proportion of the conductive agent is 1.8%, 1.9%, 2%, 2.1%, 2.2%, 2.3%, 2.4%, or 2.5% or in a numerical range between any two thereof.

When the mass proportion of the conductive agent is within the appropriate range, the electrical contact between the graphite negative electrode active material and the graphite negative electrode active material is enhanced without a loss of the energy density of the battery due to too much active conductive agent contained in the negative electrode film layer.

By way of example, the negative electrode current collector has two surfaces opposite to each other in a thickness direction of the negative electrode current collector, and the negative electrode film layer is arranged on either or both of the two opposite surfaces of the negative electrode current collector.

In some embodiments, the negative electrode current collector can be a metal foil or a composite current collector. For example, as the metal foil, a copper foil can be used. The composite current collector can comprise a polymer material substrate layer and a metal layer formed on at least one surface of the polymer material substrate. The composite current collector can be formed by forming a metal material (copper, a copper alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), polyethylene (PE), etc.).

In some embodiments, the negative electrode film layer can also further include negative electrode active materials other than the above graphite negative electrode active material. In some embodiments, the other negative electrode active materials include, but are not limited to, one or more of conventional natural graphite, artificial graphite, soft carbon, hard carbon, a silicon-based material, a tin-based material, and lithium titanate. The silicon-based material can include one or more of elemental silicon, silicon oxide, a silicon-carbon composite, a silicon-nitrogen composite, and a silicon alloy material. The tin-based material can include one or more of elemental tin, tin oxide, or a tin alloy material.

In some embodiments, the conductive agent can include at least one of superconducting carbon, acetylene black, carbon black, Ketjen black, carbon dots, carbon nanotubes, graphene, and carbon nanofibers.

In some embodiments, the negative electrode film layer further comprises a binder. In some embodiments, the binder can be at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further includes other auxiliaries, for example, a thickener (such as sodium carboxymethyl cellulose (CMC-Na)).

In some embodiments, the negative electrode plate can be prepared by: dispersing the above components for preparing the negative electrode plate, for example, the negative electrode active material, the conductive agent, the binder, and any other components, in a solvent (for example, deionized water) to form a negative electrode slurry; and applying the negative electrode slurry to the negative electrode current collector, followed by drying, cold pressing, and other processes, to obtain the negative electrode plate.

### [Positive electrode plate]

The positive electrode plate comprises a positive electrode current collector and a positive electrode film layer arranged on at least one surface of the positive electrode current collector, and the positive electrode film layer comprises the positive electrode active material according to the first aspect of the present disclosure.

By way of example, the positive electrode current collector has two surfaces opposite to each other in a thickness direction of the positive electrode current collector, and the positive electrode film layer is arranged on either or both of the two opposite surfaces of the positive electrode current collector.

In some embodiments, the positive electrode current collector can be a metal foil or a composite current collector. For example, as the metal foil, an aluminum foil can be used. The composite current collector can include a polymer material substrate layer and a metal layer formed on at least one surface of the polymer material substrate layer. The composite current collector can be formed by forming a metal material (aluminum, an aluminum alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), polyethylene (PE), etc.).

In some embodiments, the positive electrode active material can be a positive electrode active material well known in the art for batteries. By way of example, the positive electrode active material can comprise at least one of the following materials: a lithium-containing phosphate with an olivine structure, a lithium transition metal oxide, and respective modified compounds thereof. However, the present disclosure is not limited to these materials. Other traditional materials that can be used as positive electrode active materials for batteries may alternatively be used. Only a single one of or a combination of two or more of these positive electrode active materials can be used. Examples of lithium transition metal oxides can include, but are not limited to, at least one of lithium cobalt oxide (e.g., LiCoO₂), lithium nickel oxide (e.g., LiNiO₂), lithium manganese oxide (e.g., LiMnO₂ and LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), lithium nickel cobalt aluminum oxide (e.g., LiNi_{0.85}Co_{0.15}Al_{0.05}O₂), modified compounds thereof, etc. Examples of the lithium-containing phosphate with an olivine structure can include, but are not limited to, at least one of lithium iron phosphate (LiFePO₄ (also abbreviated as LFP)), a composite material of lithium iron phosphate and carbon, lithium manganese phosphate (such as LiMnPO₄), a composite material of lithium manganese phosphate and carbon, lithium iron manganese phosphate, and a composite material of lithium iron manganese phosphate and carbon.

In some embodiments, the positive electrode film layer further comprises a binder. By way of example, the binder can include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer further includes a conductive agent. By way of example, the conductive agent can include at least one of superconducting carbon, acetylene black, carbon black, Ketjen black, carbon dots, carbon nanotubes, graphene, and carbon nanofibers.

In some embodiments, the positive electrode plate can be prepared by: dispersing the above components for preparing the positive electrode plate, for example, the positive electrode active material, the conductive agent, the binder, and any other components, in a solvent (for example, N-methylpyrrolidone) to form a positive electrode slurry; and applying the positive electrode slurry to the positive electrode current collector, followed by drying, cold pressing, and other processes, to obtain the positive electrode plate.

### [Electrolyte]

The electrolyte plays a role in conducting ions between the positive electrode plate and the negative electrode plate. The type of the electrolyte is not specifically limited in the present disclosure and can be selected according to requirements. For example, the electrolyte can be liquid, gelled, or all solid.

In some embodiments, the electrolyte is an electrolyte solution. The electrolyte solution comprises an electrolyte salt and a solvent.

In some embodiments, the electrolyte salt can be at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further comprises an additive. For example, the additive can include a negative electrode film-forming additive and a positive electrode film-forming additive and can further include additives that can improve some properties of the battery, for example, an additive that improves the overcharging performance of the battery and an additive that improves the high-temperature or low-temperature performance of the battery.

### [Separator]

In some embodiments, the secondary battery further includes a separator. The type of the separator is not particularly limited in the present disclosure, and any well-known separator with a porous structure having good chemical stability and mechanical stability can be selected.

In some embodiments, the material of the separator can be at least one of glass fibers, non-woven fabric, polyethylene, polypropylene, and polyvinylidene fluoride. The separator can be either a single-layer thin film or a multilayer composite thin film without special limitations. When the separator is a multilayer composite thin film, the materials of the layers can be the same or different without special limitations.

In some embodiments, the positive electrode plate, the negative electrode plate, and the separator can be made into an electrode assembly by a winding process or a lamination process.

In some embodiments, the secondary battery can include an outer package. The outer package can be used for encapsulating the above electrode assembly and electrolyte.

In some embodiments, the outer package of the secondary battery can be a hard shell, such as a hard plastic shell, an aluminum shell, or a steel shell. The outer package of the secondary battery can also be a soft package, such as a pouch-type soft package. The material of the soft package can be plastic, and examples of the plastic can include polypropylene, polybutylene terephthalate, polybutylene succinate, etc.

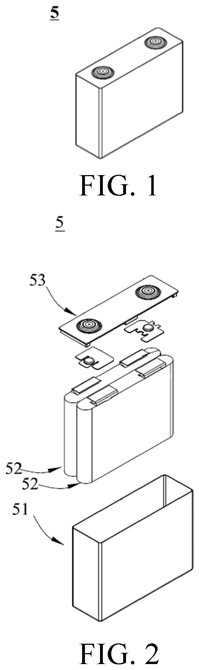

The shape of the secondary battery is not particularly limited in the present disclosure, and the secondary battery can be cylindrical, prismatic, or in any other shape. For example, FIG. 1 is a secondary battery 5 with a square structure as an example.

In some embodiments, referring to FIG. 2, the outer package can include a case 51 and a cover plate 53. The case 51 can include a bottom plate and a side plate connected to the bottom plate, and the bottom plate and the side plate enclose to form an accommodating cavity. The case 51 has an opening in communication with the accommodating cavity, and the cover plate 53 can cover the opening to close the accommodating cavity. The positive electrode plate, the negative electrode plate, and the separator can be made into an electrode assembly 52 by a winding process or a lamination process. The electrode assembly 52 is encapsulated into the accommodating cavity. An electrolyte solution infiltrates into the electrode assembly 52. The number of electrode assemblies 52 contained in the secondary battery 5 can be one or more and can be selected by those skilled in the art according to specific actual requirements.

In some embodiments, the secondary battery can be assembled into a battery module. The number of secondary batteries contained in the battery module can one or more, and the specific number can be selected by those skilled in the art based on the application and capacity of the battery module.

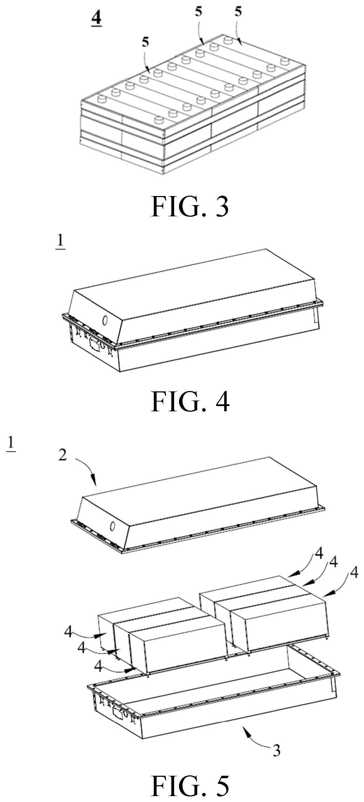

FIG. 3 is a battery module 4 as an example. Referring to FIG. 3, in the battery module 4, a plurality of secondary batteries 5 can be sequentially arranged in a length direction of the battery module 4. Certainly, they can also be arranged in any other way. The plurality of secondary batteries 5 can be further fixed by fasteners.

In some embodiments, the battery module 4 can further include a shell having an accommodating space, in which the plurality of secondary batteries 5 are accommodated.

In some embodiments, the above battery module can further be assembled into a battery pack. The number of battery modules contained in the battery pack can be one or more, and the specific number can be selected by those skilled in the art according to the application and capacity of the battery pack.

FIGs. 4 and 5 are a battery pack 1 as an example. Referring to FIGs. 4 and 5, the battery pack 1 can include a battery box and a plurality of battery modules 4 arranged in the battery box. The battery box includes an upper box 2 and a lower box 3. The upper box 2 can cover the lower box 3 to form an enclosed space for accommodating the battery module 4. The plurality of battery modules 4 can be arranged in the battery box in any manner.

In addition, the present disclosure further provides an electrical device. The electrical device includes at least one of the secondary battery, battery module, or battery pack provided in the present disclosure. The secondary battery, battery module, or battery pack can be either used as a power source for the electrical device or as an energy storage unit for the electrical device. The electrical device can include, but is not limited to, a mobile apparatus (for example, a mobile phone or a laptop), an electric vehicle (for example, an all-electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

For the electrical device, the secondary battery, battery module, or battery pack can be selected according to the requirements during use.

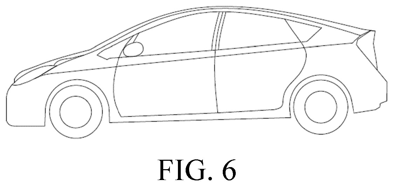

FIG. 6 is an electrical device as an example. The electrical device is an all-electric vehicle, a hybrid electric vehicle, a plug-in hybrid electric vehicle, etc. To satisfy the need of the electrical device for a high power and high energy density of secondary batteries, a battery pack or a battery module can be used.

The device used as another example can be, for example, a mobile phone, a tablet computer, a laptop, etc. The device is generally required to be light and thin and can use a secondary battery as a power source.

### EMBODIMENTS

Embodiments of the present disclosure are illustrated hereinafter. The embodiments described below are exemplary and only used to explain the present disclosure and should not be construed as a limitation on the present disclosure. In embodiments in which no specific technologies or conditions are specified, technologies or conditions described in the literature in the art or product specifications are followed. The reagents or instruments used without manufacturer indicated are all commercially available conventional products.

### Embodiment 1

### (1) Preparation of graphite negative electrode active material

Petroleum coke with a volume proportion of mosaic and domain structures of 57.3% and a caking index of 6.2 was coarsely crushed. The coarsely crushed material was then crushed and sieved. The sieved material was shaped and classified. A particular amount of fine powder was removed during the classification process to obtain a precursor. The fine powder referred to particles with a volume distribution particle size Dv50 of 3-7 µm and a particle size distribution (Dv90-Dv10)/Dv50 > 1.6. The volume distribution particle size Dv50 of the precursor was 16.2 µm. The particle size distribution (Dv90-Dv10)/Dv50 of the precursor was 1.78.

The precursor was subjected to a graphitization treatment in an Acheson furnace, where the graphitization treatment temperature was 2800°C, and the maximum power used for the graphitization treatment was 23000 W (herein, it referred to the actual power of the Acheson furnace and accounted for about 85% of the rated power of the Acheson furnace). After the power was maintained constant for 40 h, the surface temperature of a graphite crucible in the Acheson furnace was cooled to 200°C to obtain an intermediate product.

The obtained intermediate product was subjected to sieving and magnetic separation to obtain a graphite negative electrode active material. The graphite negative electrode active material had a degree of graphitization of 88%, an oil absorption value of 43 ml/100 g, a specific surface area of 0.92 m²/g, and a Dv50 of 14.8 µm.

### (2) Preparation of negative electrode plate

The graphite negative electrode active material prepared above, the conductive agent Super P, the thickener carboxymethyl cellulose (CMC), and the binder styrene-butadiene rubber (SBR) were mixed in a dry mass ratio of 96:1:1.2:1.8. The solvent deionized water was then added. The mixture was stirred under the action of a vacuum stirrer until the system was uniform to obtain a negative electrode slurry. The negative electrode slurry was uniformly applied to a copper foil, which acted as a negative electrode current collector, followed by drying, cold pressing, and slitting to obtain a negative electrode plate. The negative electrode plate had a compaction density of 1.50 g/cm³ and an areal density of 9.6 mg/cm².

### (3) Preparation of positive electrode plate

The positive electrode active material lithium iron phosphate (LFP), the conductive agent Super P, and the binder polyvinylidene fluoride were mixed in a mass ratio of 97:1:2. The solvent N-methylpyrrolidone was added and stirred under the action of a vacuum stirrer until the mixture was uniform to obtain a positive electrode slurry. The positive electrode slurry was uniformly applied to an aluminum foil, which acted as a positive electrode current collector, followed by drying, cold pressing, and slitting to obtain a positive electrode plate. The positive electrode plate had a compaction density of 2.50 g/cm³ and an areal density of 19.7 mg/cm².

### (4) Preparation of electrolyte solution

In an argon atmosphere glove box with water content < 10 ppm, ethylene carbonate (EC), ethyl methyl carbonate (EMC), and diethyl carbonate (DEC) were mixed in a volume ratio of 1:1:1 to obtain an organic solvent. The fully dried lithium salt LiPF₆ was then dissolved in the mixed organic solvent to prepare an electrolyte solution with a concentration of 1 mol/L. Vinylene carbonate was added to the above solution. The mass content of vinylene carbonate was 2% of the total mass of the electrolyte solution.

### (5) Preparation of separator

A polypropylene film was used as a separator.

### (6) Preparation of lithium-ion battery

The above positive electron plate, separator, and negative electron plate were stacked in sequence such that the separator was located between the positive electrode plate and the negative electrode plate for isolation. The positive electron plate, separator, and negative electron plate were then wound to obtain an electrode assembly. The electrode assembly was placed in an outer package, dried, then injected with the electrolyte solution, and subjected to vacuum encapsulation, standing, chemical formation, shaping, and other processes to obtain a lithium-ion battery.

Embodiments 2 and 3 were basically the same as Embodiment 1, except that the caking index of the raw material, the maximum power of the graphitization treatment, and the particle size distribution (Dv90-Dv10)/Dv50 of the precursor were adjusted, as specifically shown in Table 1.

Comparative Examples 1-3 were basically the same as Embodiment 1, except that the volume proportion of mosaic and domain structures in the raw material, the caking index of the raw material, the maximum power of the graphitization treatment, and the particle size distribution (Dv90-Dv10)/Dv50 of the precursor were adjusted, as specifically shown in Table 1.

**Table 1**

| | Preparation parameter | | | |
|---|---|---|---|---|
| No. | Volume proportion of mosaic and domain structures in raw material | Caking index of raw material | Maximum power of graphitization treatment | Particle size distribution (Dv90-Dv10)/Dv50 of precursor |
| Embodiment 1 | 57.30% | 6.2 | 23000 W | 1.78 |
| Embodiment 2 | 57.30% | 2.2 | 25000 W | 1.21 |
| Embodiment 3 | 57.30% | 4.3 | 24000 W | 1.46 |
| Comparative Example 1 | 57.30% | 14.3 | 24000 W | 1.44 |
| Comparative Example 2 | 65.30% | 3.8 | 21000 W | 1.43 |
| Comparative Example 3 | 37.30% | 4.2 | 26000 W | 1.47 |

### Performance test

### 1. Filtration time for negative electrode slurry

First, a 200-mesh filter screen was determined. The filter screen was cut into 25 cm * 25 cm with scissors. A clean 500 ml beaker was taken. The beaker was ensured to be clean. A 150-mesh filter screen was folded into a triangle. 500 ml of a slurry was taken and poured onto the filter screen all at once. When the slurry flows into the beaker from a tip of the filter screen, time recording was started. The time for 300 ml filtration was recorded.

### 2. Test for cycling performance of secondary battery at 60°C

At 60°C, the battery of each of the above embodiments and comparative examples was charged to a voltage of 3.65 V at a constant current of 1 C and then charged at a constant voltage of 3.65 V until the current was less than or equal to 0.05 C. Then, the battery was discharged to a voltage of 2.5 V at a constant current of 1 C. This was one charge and discharge process. A discharge capacity of the first cycle was recorded as C1. The charge and discharge cycle was repeated in this way until the capacity of the battery was attenuated to 80% of the initial capacity C1. The test was stopped and the number of test cycles was recorded.

### 3. Test for storage performance of secondary battery at room temperature

In a 25°C environment, a charge and discharge test was carried out. The battery was charged to a voltage of 3.65 V at a constant current of 1 C and then charged at a constant voltage of 3.65 V until the current was less than or equal to 0.05 C. Then, the battery was discharged to a voltage of 2.5 V at a constant current of 1 C. This was one charge and discharge process. A discharge capacity of the first cycle, i.e., the initial discharge capacity, was denoted as C0. Thereafter, the battery cell was fully charged and placed in a 60°C environment for varying durations. The battery cell was taken out every 30 days and tested at 25°C for the remaining capacity C1. This was one storage cycle. The discharge capacity of this storage cycle was namely the discharge capacity after the 1st storage. Subsequently, the 1st storage test procedure was repeated. The discharge capacity value during the storage process was recorded, and the cycle capacity retention rate after 120 days was recorded.

### III. Results

As can be seen from Table 2, the degree of graphitization of the graphite negative electrode active materials of Embodiments 1-3 of the present disclosure is 88%-93%, and the oil absorption value of the graphite negative electrode active materials is not more than 50 ml/100 g. By comparison between Embodiments 1-3 and Comparative Example 1, it can be seen that controlling the oil absorption value of the graphite negative electrode active material to be not more than 50 ml/100 g can improve the dispersibility and filterability of the negative electrode slurry and improve the cycle life and storage performance of the battery. By comparison between Embodiments 1-3 and Comparative Example 2 and 3, it can be seen that controlling the degree of graphitization of the graphite negative electrode active material to be 88%-93% can ensure both the gram capacity and cycling performance of the graphite negative electrode active material, and the battery can be endowed with both a high energy density and a long cycle life. In addition, the storage performance of the battery can also be improved.

As can be seen from Embodiments 1-3, the graphite negative electrode active materials have a specific surface area of less than or equal to 1.4 m²/g, the negative electrode slurries have excellent dispersibility and filterability, the graphite negative electrode active materials have a high gram capacity, and the secondary batteries have excellent cycling stability and storage stability.

As can be seen from Embodiments 1-3, the graphite negative electrode active materials have a volume distribution particle size Dv50 of 12-16 µm, the negative electrode slurries have excellent dispersibility and filterability, the graphite negative electrode active materials have a high gram capacity, and the secondary batteries have excellent cycling stability and storage stability.

**Table 2**

| | Graphite negative electrode active material | | | | | Negative electrode Slurry | Battery | |
|---|---|---|---|---|---|---|---|---|
| No. | Degree of graphitization | Oil absorption value (ml/ 100 g) | Specific surface area (m²/g) | Dv50 (µm) | Gram capacity (mAh/g) | Filtration time (s) | Number of cycles | Storage performance |
| Embodiment 1 | 88% | 43 | 0.92 | 14.8 | 339 | 120 | 2341 | 91.50% |
| Embodiment 2 | 90% | 30 | 1.21 | 14.5 | 347 | 90 | 2319 | 91.70% |
| Embodiment 3 | 93% | 38 | 1.09 | 14.7 | 345 | 102 | 2398 | 91.90% |
| Comparative Example 1 | 93% | 55 | 1.13 | 16.1 | 341 | 200 | 2198 | 90.20% |
| Comparative Example 2 | 85% | 39 | 1.01 | 14.8 | 325 | 110 | 2314 | 91.40% |
| Comparative Example 3 | 95% | 40 | 1.40 | 14.7 | 355 | 136 | 1893 | 89.30% |

It needs to be noted that the present disclosure is not limited to the above embodiments. The above embodiments are only illustrative, and the embodiments within the scope of the technical solution of the present disclosure that have substantively the same composition and the same role and effect as the technical idea are all included in the technical scope of the present disclosure. In addition, within the scope of not departing from the gist of the present disclosure, various variations made to the embodiments that are conceivable to those skilled in the art and other modes constructed by combining some constituent elements of the embodiment are also included in the scope of the present disclosure.

## Claims

1. A graphite negative electrode active material, wherein a degree of graphitization of the graphite negative electrode active material is 88%-93%, and an oil absorption value of the graphite negative electrode active material is not more than 50 ml/100 g.

2. The graphite negative electrode active material according to claim 1, wherein the oil absorption value of the graphite negative electrode active material is 30 ml/100 g-43 ml/100 g.

3. The graphite negative electrode active material according to claim 1 or 2, wherein a particle size distribution (Dv90-Dv10)/Dv50 of the graphite negative electrode active material is 1.2-1.6.

4. The graphite negative electrode active material according to any one of claims 1 to 3, wherein based on the total number of particles in the graphite negative electrode active material, a proportion of a number of primary particles in the graphite negative electrode active material is more than or equal to 85%, optionally 85%-100%.

5. The graphite negative electrode active material according to any one of claims 1 to 4, wherein a specific surface area of the graphite negative electrode active material is less than or equal to 1.4 m²/g, optionally 0.6 m²/g-1.3 m²/g.

6. The graphite negative electrode active material according to any one of claims 1 to 5, wherein a volume distribution particle size Dv50 of the graphite negative electrode active material is 12 µm-16 µm, optionally 13 µm-15 µm.

7. The graphite negative electrode active material according to any one of claims 1 to 6, wherein the graphite negative electrode active material satisfies at least one of:
(1) a powder compaction density of the graphite negative electrode active material under a pressure of 49000 N is less than or equal to 1.85 g/cm³, optionally 1.70 g/cm³-1.85 g/cm³;
(2) a tap density of the graphite negative electrode active material is 1.2 g/cm³-1.4 g/cm³; and
(3) a gram capacity of the graphite negative electrode active material is more than or equal to 340 mAh/g, optionally 341 mAh/g-347 mAh/g.

8. A method for preparing a graphite negative electrode active material, wherein the method comprises the following steps:
providing a raw material;
treating the raw material to obtain a precursor;
performing a graphitization treatment on the precursor to obtain an intermediate product; and
performing a sieving treatment on the intermediate product to obtain a graphite negative electrode active material, wherein a degree of graphitization of the graphite negative electrode active material is 88%-93%, and an oil absorption value of the graphite negative electrode active material is not more than 50 ml/100 g.

9. The preparation method according to claim 8, wherein the raw material comprises at least one of petroleum coke, needle coke, and pitch coke, optionally petroleum coke.

10. The preparation method according to claim 8 or 9, wherein based on the total volume of structures in the raw material, a volume proportion of mosaic and domain structures is more than or equal to 50%, optionally 50%-65%.

11. The preparation method according to any one of claims 8 to 10, wherein a caking index of the raw material is less than or equal to 10, optionally 1-9.

12. The preparation method according to any one of claims 8 to 11, wherein the precursor satisfies at least one of the following conditions:
a volume distribution particle size Dv50 of the precursor is 12 µm-18 µm; and/or
a particle size distribution (Dv90-Dv10)/Dv50 of the precursor is 1.2-1.8.

13. The preparation method according to any one of claims 8 to 12, wherein a maximum power of the graphitization treatment is 70%-90% of a rated power of a graphitization apparatus.

14. The preparation method according to claim 13, wherein the maximum power of the graphitization treatment is 23000 W-25000 W; and/or a constant power time at the maximum power of the graphitization treatment is 10 h-50 h.

15. The preparation method according to any one of claims 8 to 14, wherein the sieving treatment on the intermediate product specifically comprises the following steps:
performing the sieving treatment on the intermediate product to remove particles having a maximum particle size Dmax of more than 100 µm from the intermediate product to obtain the graphite negative electrode active material.

16. A secondary battery comprising a negative electrode plate, wherein the negative electrode plate comprises a negative electrode current collector and a negative electrode film layer formed on at least one surface of the negative electrode current collector, wherein the negative electrode film layer comprises the graphite negative electrode active material according to any one of claims 1 to 7 or a graphite negative electrode active material prepared by the preparation method according to any one of claims 8 to 15.

17. The secondary battery according to claim 16, wherein the negative electrode film layer comprises a conductive agent, and based on a mass of the negative electrode film layer, a mass content of the conductive agent is more than or equal to 1.5%, optionally 1.8%-2.5%.

18. An electrical device, wherein the electrical device comprises the secondary battery according to claim 16 or 17.
